# EUROPEAN PATENT APPLICATION

(11) **EP 2 741 218 A1**
(43) Date of publication of application: **11.06.2014**
(21) Application number: 12306518.7
(22) Date of filing: 05.12.2012
(51) Int. Cl.: G06F 17/30

(54) **Method for navigating in a hierarchical hyper-graph**

(71) Applicant: Thomson Licensing, 92130 Issy-les-Moulineaux (FR)
(72) Inventor: Marvie, Jean Eudes, 35830 Betton (FR); Sourimant, Gael, 35000 Rennes (FR); Gautron, Pascal, 35000 Rennes (FR)
(74) Representative: Schmidt-Uhlig, Thomas

(57) **Abstract**

The present invention relates to a method for navigating through a collection of media having a hierarchical structure, the collection of media containing a large number of elements. The method comprises the following steps:
- receiving a start level value,
- displaying all elements of the hierarchical level that corresponds to the start level value, each element representing media,
- receiving a user navigation input,
- highlighting a neighbour element at the level displayed if the user navigation input is a "move within level" request, or
- highlighting an element of another level if the user navigation input is a "switch level" request, or
- starting an operation linked to the highlighted element if the user navigation input is an "execute" request,
- wherein the elements displayed are arranged in a sphere like manner on a two-dimensional display.

## Description

The present invention relates to a method for navigating through a collection of media having a hierarchical structure, the collection of media containing a large number of elements.

Methods for navigating a file system are well known. Usually, a hierarchical structure contains folders which can be opened by a user, e.g. by a double-click. If the user double-clicks to a simple item representing a file and not a folder, the file is executed. The items are displayed one beside another in a matrix like way. This way of navigation might become inconvenient especially if large databases are addressed.

G. Schaefer and M. Stuttard, "An on-line tool for browsing large image repositories", in Int. Conference on Information Retrieval and Knowledge Management, 2010, pp. 102-106 disclose a 'Hue Sphere Image Database Browser' for browsing a hierarchical storage structure wherein each image in the visualisation can correspond to a cluster of images that can be expanded by the user. A spherical visualisation space is used, since users seem to be familiar with the concept of a globe and how to navigate on it.

G. Schaefer, 'Image browsers - effective and efficient tools for managing large image collections', in Int. Conference on Multimedia Computing and Systems (ICMCS), 2011, pp. 1-3 discloses the concept in further detail.

It is an object of the invention to improve navigation through large databases of images and/or videos.

According to the invention, a method for navigating through a collection of media having a hierarchical structure is proposed. The media might be audio, video, images or any other kind of media. The method comprising the steps of:
- receiving a start level value,
- displaying all elements of the hierarchical level that corresponds to the start level value, each element representing media. When a user navigation input is received, it is analyzed which type of request the user navigation input concerns. At least, it is distinguished between "move within level", "switch level" and "execute" requests. When a "move within level" request is received, a neighbour element at the level displayed is highlighted. When a "switch level" request is received, an element of another level is highlighted. Thus, the level in the hierarchical structure is changed according to the user navigation input.

When an "execute" request is received, an operation linked to the highlighted element is started. Thus, according to the invention, the element (e.g. media symbol like a thumbnail, an image or an icon) provides access to a hierarchical level structure like a folder as well as to the media content itself. Further, the elements are displayed in a sphere like manner on a two-dimensional display. The method according to the invention has the advantage that a more user friendly, intuitive and universal way of navigation through and representation of media content of a large data base is made possible.

Advantageously, in case the user navigation input is a "switch level" request, the method smoothly fades out the currently displayed level and smoothly fades in on the requested hierarchical level. Preferably, fading out the currently displayed level and fading in on the requested hierarchical level is done without any interruption. Advantageously, the requested hierarchical level has the same structure as the currently displayed level. Fading out and fading in might mean that the present view blinds out or bleaches out and the new view blinds in or lights up. It might also mean that a present view shrinks to the centre or a corner or any other point on the screen and the new view blows out or grows up of this point or originates the same way from any other point. This has the advantage that the method for navigating looks nice and intuitive to the user and operation of the user interface using this kind of method of navigating provides a good look-and-feel to the user.

Preferably, in case a user navigation input is a "move within level" request, the newly highlighted element is shifted into the centre and the remaining elements are rotated to surround the newly highlighted element, wherein the number of neighbouring elements on each side of the highlighted element remains constant. Thus, when highlighting the neighbour element, the newly highlighted element moves to the centre of the display, and all surrounding elements move accordingly. This has the advantage that the highlighted element is always in the centre of the display and the user can focus his view always to the same area. When the other elements are shifted accordingly, depending on the direction of the shift and in case the same matrix of elements is kept, at one side there is some free space to present new elements, and at the opposite side, there are elements which are 'shifted out' of the matrix to be displayed. Thus, these elements are inserted at the side where the free space came up. In other words, the elements in the outer area, which are shifted out of the visible area, are included on the opposite side.

Advantageously, the step of displaying the elements in a sphere like manner on a two-dimensional display is made by a projection of the sphere on a two-dimensional display as seen from the centre of the sphere or by a projection of the sphere on a two-dimensional display as seen from the outside of the sphere. With these projection methods, the user gets the impression of navigating in a three dimensional sphere.

According to another embodiment of the invention, the elements displayed are arranged in a cylinder like manner instead of a sphere like manner. Sphere and Cylinder are variants of an ellipsoid with special conditions for the semiaxes. The sphere has three semiaxes of the same length, the cylinder has one semiaxis of infinite length. An ellipsoid with any other combination of semiaxes except the trivial case of a plane is here regarded as sphere like.

Preferably, in case two "switch level" user navigation inputs are received, fading out the currently displayed level and fading in on the requested hierarchical level via fading in and fading out the intermediate hierarchical level is done without interruption. Thus, the user is enabled to input a command causing crossing over the next hierarchical level to reach a further hierarchical level in a smooth and convenient way. This might be the case when the user changes two hierarchical levels in the same direction or when the user changes from a present level to an upper hierarchical level and then back to the present level, but thereby selecting another element in the upper hierarchical level and thus selecting another neighbourhood of elements at the present hierarchical level.

According to the invention, an apparatus performing the method for navigating through elements on a two-dimensional display is proposed.

For better understanding the invention shall now be explained in more detail in the following description with reference to the figures. It is understood that the invention is not limited to this exemplary embodiment and that specified features can also expediently be combined and/or modified without departing from the scope of the present invention.
- Fig. 1: shows a representation and navigation concept for multimedia elements according to the invention
- Fig. 2: shows the concept of the representation of the elements for navigation
- Fig. 3: shows the elements which are navigated trough according to a first embodiment
- Fig. 4: shows the elements which are navigated trough according to a second embodiment
- Fig. 5: shows the elements which are navigated trough according to a third embodiment
- Fig. 6: shows the elements which are navigated trough according to a fourth embodiment
- Fig. 7: shows the elements which are navigated trough according to a fifth embodiment

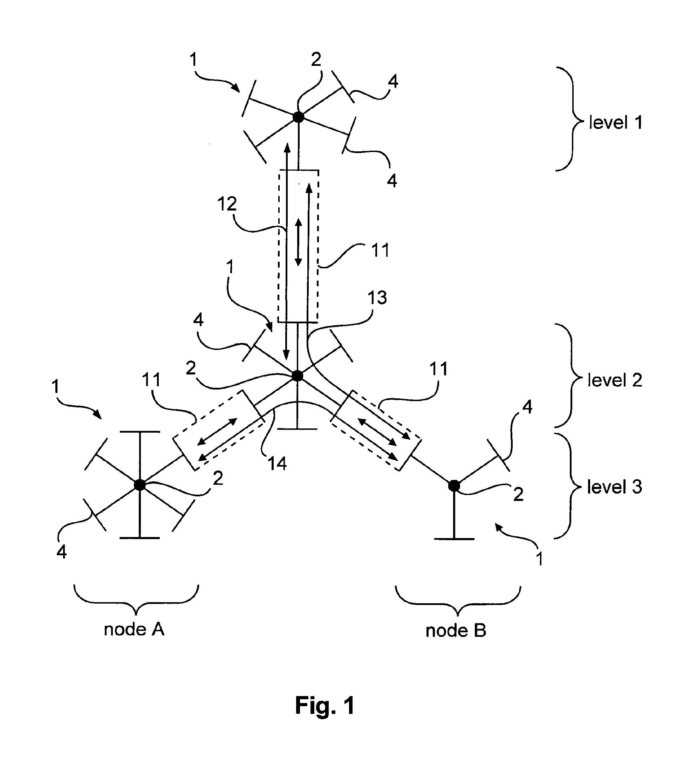

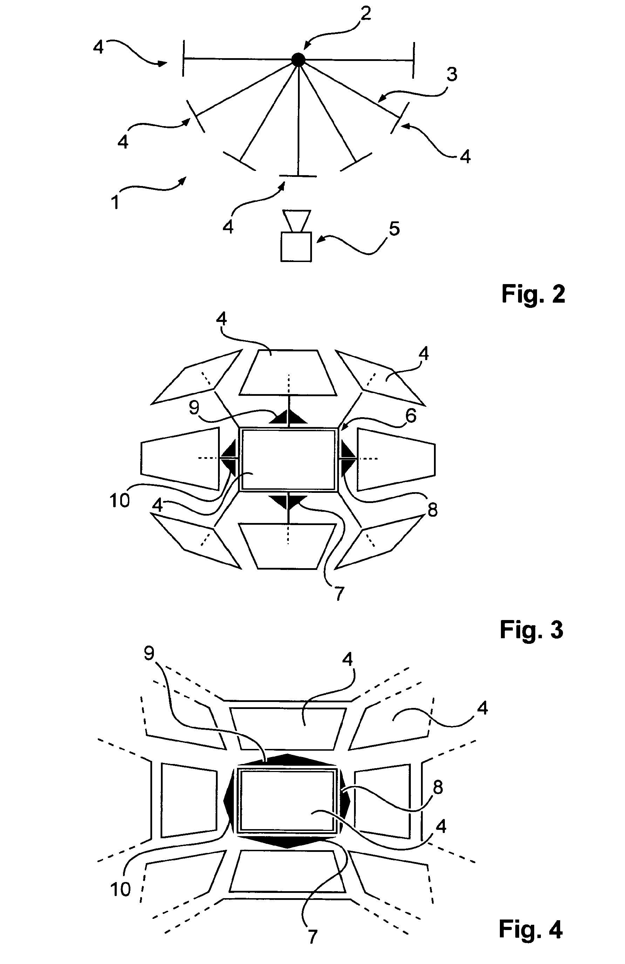

Fig. 1 discloses a hierarchical representation and navigation concept according to the invention. A dataset which is represented and navigated through contains multimedia elements (4), e.g. images, audio and/or video files. Exemplary, the dataset of multimedia elements (4) contains three hierarchical levels (level1, level2, level3). The multimedia elements (4) are grouped within the hierarchy. Multimedia elements (4) related in some way to each other are grouped. Each hierarchical level (level1, level2, level3) contains at least one group (1) of multimedia elements (4). A group (1) of multimedia elements (4) is disclosed in more detail in Fig. 2. The group (1) of multimedia elements (4) is arranged in a sphere like manner. For illustrating purposes, a camera position (5) is given, which defines a viewing point onto the sphere. The optical axis of the camera (5) is oriented into the direction of the centre (2) of the sphere. Multimedia elements (4) are arranged on the front half sphere, thus all elements (4) are seen from the camera point of view. Then, the multimedia elements (4) arranged on the front half sphere are projected onto a two-dimensional display to present them in a sphere like manner in the two-dimensional space. This presentation is convenient and advantageous to the user, as it causes the feeling that the user is in fact navigating on a sphere. Navigating on a sphere is intuitive and familiar to the user. In the three-dimensional space, the multimedia elements (4) on the front half sphere are all arranged in the same distance from the centre (2) and are spread with constant angle in azimuth and elevation direction. Azimuth and elevation are chosen such that the multimedia elements (4) do not overlap. The representation of the multimedia elements (4) on a two-dimensional display for navigation purposes is done by displaying the elements in a sphere like manner according to the exemplary embodiments of the invention described below.

Going back to Fig. 1, each group (1) of multimedia elements (4) might be connected to at least one other group (1) of multimedia elements (4) by a tunnel (11) for transition from one group (1) to another group (1). When navigating through a tunnel (11) from one group (1) of multimedia elements (4) to another group (1) of multimedia elements (4), the hierarchical level (level1, level2, level3) is changed. The whole data set including all groups (1) of multimedia elements (4) and all tunnels (11) is referred to as hyper-graph.

In more detail, navigation in a hyper-graph is related to selecting one multimedia element (4) within a group (1) of multimedia elements (4), referred to as "move within level". Another way of navigation is navigating within the hyper-graph hierarchy. A transition (12) from one level (level1, level2, level3) to another level (level1, level2, level3) corresponds to switching from a multimedia element (4) of a first group (1) to a multimedia element (4) of a second group (1), thereby moving from one group (1) to another group (1). This switching is done via a tunnel (11) associated to one multimedia element (4) of the first group (1) and a corresponding multimedia element (4) of the second group. This transition is referred to as "switch level". Thus, a tunnel (11) is a way to define transitions between groups (1) of multimedia elements (4). The corresponding multimedia element (4) of the second group can be any multimedia element (4) of the second group, which might be chosen randomly or which might be chosen according to its content. When such a transition is triggered, the first group (1) of multimedia elements (4) fades out while the second group (1) of multimedia elements (4) fades in. After a transition, the multimedia element (4) of the second group (1), which is connected to the tunnel (11), is displayed in the center according to the below mentioned embodiments.

A transition (13) might also start at one hierarchical level (level1), pass another hierarchical level (level2) and target a group (1) of multimedia elements (4) at a third hierarchical level (level3). Such a transition (13) is selectable via shortcuts and then the navigation operates smoothly and passes through the intermediate node (level2) without transition interruption. Another transition using shortcuts for passing through is a transition from a group (1) of multimedia elements (4) on a first level (level3) to a group (1) of multimedia elements (4) on the same level (level3). Therefore, to reach the targeted group (1) of multimedia elements (4), a transition is made to a group (1) of multimedia elements (4) of a higher level (level2) and from there back to the lower level (level3) targeting the new group (1) of multimedia elements (4). Also in this case, the navigation operates smoothly and passes through the intermediate node (level2) without transition interruption.

Fig. 3 shows the presentation of the multimedia elements (4) arranged on a sphere as described above on a two-dimensional display in a sphere like manner according to a first embodiment of the invention. A perspective projection of the multimedia elements (4) of a group (1) having a projection center at the location of the camera (5) on a two-dimensional display is made.

The center multimedia element (6) is selected. From this center multimedia element (6) navigation in down (7), right (8), up (9) and left (10) direction is possible, e.g. using the arrow keys of a remote control. When navigating in one of down (7), right (8), up (9) and left (10) direction, transition of the currently selected multimedia element (6) to the neighboring multimedia element (4) in the direction as selected is made. Therefore, the displayed multimedia elements (4) are shifted in a smooth rotation, such that the newly selected multimedia element (6) is again in the centre of the display at a position of the currently selected multimedia element (6).

Fig. 4 shows the presentation of the multimedia elements (4) on a two-dimensional display in a sphere like manner according to a second embodiment of the invention. For the projection on the two-dimensional display, the camera (5) and therefore the projection centre is located inside the sphere, ideally in the centre (2) of the sphere. The projection of the multimedia elements (4) is done from the inside of the sphere. Navigation commands in down (7), right (8), up (9) and left (10) direction cause the same kind of smooth rotation of the multimedia elements (4) as described above.

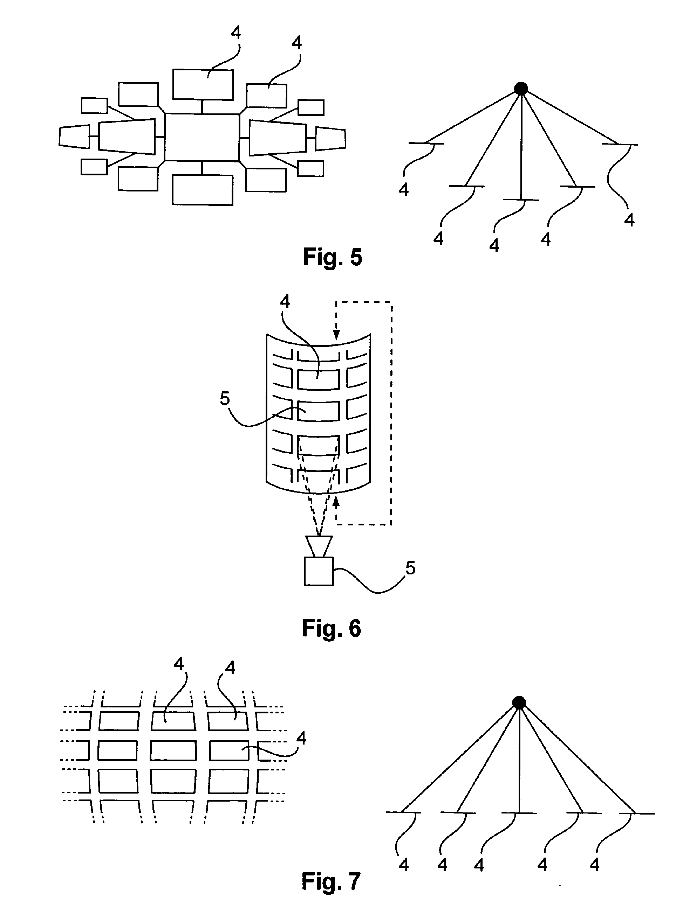

Fig. 5 shows the presentation of the multimedia elements (4) on a two-dimensional display in a sphere like manner according to a third embodiment of the invention. Before the projection, the multimedia elements (4) are aligned to the user position. The lengths and spread angles of the multimedia elements (4) are adapted to the camera (5) position, which is the location where the user resides.

Fig. 6 shows the presentation of the multimedia elements (4) on a two-dimensional display in a sphere like manner according to a fourth embodiment of the invention. For the projection, the multimedia elements (4) are placed on a three-dimensional looping cylinder, which is an ellipsoid having one semiaxis of infinite length and the other two semi axis have the same length. That means that the top cap is virtually connected to the bottom cap of the cylinder. No multimedia elements (4) are displayed on the cylinder caps. They are only placed along its height. The projection is made from a camera (5) position located outside or inside the cylinder.

Fig. 7 shows the presentation of the multimedia elements (4) on a two-dimensional display in a sphere like manner according to a fifth embodiment of the invention. The multimedia elements (4) are arranged on a large looping plane facing the virtual camera (5). The looping property corresponds to the one described to the cylindrical mode above, and applies both to the horizontal and vertical boundaries of the aforementioned plane.

## Claims

1. Method for navigating through a collection of media having a hierarchical structure, comprising the steps of:
- receiving a start level value,
- displaying all elements (4) of the hierarchical level (level1, level2, level3) that corresponds to the start level value, each element (4) representing media,
- receiving a user navigation input,
- highlighting a neighbour element (4) at the level (level1, level2, level3) displayed if the user navigation input is a "move within level" request, or
- highlighting an element (4) of another level (level1, level2, level3) if the user navigation input is a "switch level" request, or
- starting an operation linked to the highlighted element (6) if the user navigation input is an "execute" request,
- wherein the elements (4) displayed are arranged in a sphere like manner on a two-dimensional display.

2. Method for navigating through a hierarchical structure according to claim 1, further having the step of:
- in case the user navigation input is a "switch level" request, fading out the currently displayed level and fading in on the requested hierarchical level.

3. Method for navigating through a hierarchical structure according to claims 1 or 2, further having the step of:
- in case a user navigation input is a "move within level" request, the newly highlighted element is shifted into the centre and the remaining elements are rotated to surround the newly highlighted element, wherein the number of neighbouring elements on each side of the highlighted element remains constant.

4. Method for navigating through a hierarchical structure according to one of claims 1 to 3, wherein the step of displaying the elements in a sphere like manner on a two-dimensional display is made by a projection of the sphere as seen from the centre of the sphere on a two-dimensional display.

5. Method for navigating through a hierarchical structure according to one of claims 1 to 3, wherein the step of displaying the elements in a sphere like manner on a two-dimensional display is made by a projection of the sphere as seen from the outside of the sphere on a two-dimensional display.

6. Method for navigating through a hierarchical structure according to one of claims 1 to 5, wherein the elements displayed are arranged in a cylinder like manner instead of a sphere like manner.

7. Method for navigating through a hierarchical structure according to one of claims 2 to 6, wherein in case two "switch level" user navigation inputs are received, fading out the currently displayed level and fading in on the requested hierarchical level via fading in and fading out the intermediate hierarchical level without interruption.

8. Apparatus for navigating through elements on a two-dimensional display, the apparatus being performed for navigating through the elements displayed is done according to a method according to one of claims 1 to 7.
